# EUROPEAN PATENT APPLICATION

(11) **EP 2 207 284 A1**
(43) Date of publication of application: **14.07.2010**
(21) Application number: 09305014.4
(22) Date of filing: 07.01.2009
(51) Int. Cl.: H04H 60/33

(54) **A method for monitoring an audience measurement relating to data broadcast to a terminal, and corresponding terminal token and system**

(71) Applicant: Gemalto SA, 92190 Meudon (FR)
(72) Inventor: Praden, Anne-marie, 13122 Ventabren (FR)

(57) **Abstract**

The invention relates to a method 20 for monitoring an audience measurement relating to data. The data is broadcast, through a broadcast channel, from a broadcast device 12 and to be received by at least one terminal 14.

According to the invention, the method comprises steps in which the broadcast device broadcasts, through the broadcast channel, at least one piece of information relating to a request 22 for measuring an audience of at least one content of the data, said audience report request; and at least one terminal sends back, through a return channel, to an audience report collecting device 110, as a response to the audience report request, an audience report 28 relating to the at least one content of the broadcast data processed by the at least one terminal, said audience report response.

The invention relates also to corresponding terminal and system comprising the broadcast device 12 and the terminal 14, and a corresponding token 16 likely to cooperate with a terminal.

## Description

### Field of the invention:

The invention relates, in a general manner, to a method for monitoring an audience measurement relating to data that is broadcast to at least one terminal.

Moreover, the invention relates to a terminal for monitoring an audience measurement relating to data that is broadcast to at least one terminal.

Furthermore, the invention relates to a token for monitoring an audience measurement relating to data.

Within the present description, a token is any portable smart object that is intended to communicate with the outside world. The token may cooperate with a terminal, as a host device.

Finally, the invention relates to a system for monitoring an audience measurement relating to data that is broadcast to at least one terminal.

The present invention is notably applicable within a mobile TV (acronym for television) field.

### State of the art:

As known per se, notably within a standard termed OMA BCAST (acronym for "Open Mobile Alliance - BroadCAST"), a broadcast server broadcasts content data that is intended to a fleet of terminals.

There is a need to know an audience measurement for one special content(s), such as an identified rugby match.

### Summary of the invention:

The invention proposes a solution for satisfying the just hereinabove specified need by providing a method for monitoring an audience measurement relating to data. The data is broadcast, through a broadcast channel, from a broadcast device. The broadcast data is to be received by at least one terminal.

According to the invention, the method comprises the steps that follow.
The broadcast device broadcasts, through the broadcast channel, at least one piece of information relating to a request for measuring an audience of at least one content of the data, said audience report request, and at least one terminal sends back, through a return channel, to an audience report collecting device, as a response to the audience report request, an audience report relating to the at least one content of the broadcast data processed by the at least one terminal, said audience report response.

The principle of the invention consists in that a broadcast data stream includes, besides at least one content data stream to be sent via a broadcast channel, additional information for requesting a specific report for measuring an audience of at least one content contained within the broadcast data stream.

The data stream is broadcast to all or a part of the terminals that receive one or several content data streams followed or consumed by the concerned terminal users.

The broadcast content data stream transports information intended to the terminal(s), as a receiver(s) of the specific content(s) to be surveyed.

To survey the specific content(s), the broadcast device transmits an audience report request associated with the specific content data stream. A receipt of the audience report request by the concerned terminal(s) causes a transmission of an audience report, as a corresponding response.

The fact that the broadcast device addresses an audience report request with only one unique message included within the broadcast data, to a fleet of terminals, saves a bandwidth relating to the involved broadcasting network. Thus, none dedicated message is individually addressed to each of the fleet of terminals like within a point to point network.

Since each of the terminals receives and processes the broadcast content data to let the terminal user benefit from the broadcast content data (or consume it), the concerned terminals also receive an audience report request conveyed by the broadcast data. Each of the concerned terminals is thus involved to contribute to an audience measurement. To contribute to the audience measurement, the terminal interprets, processes the received audience report request, and replies by transmitting, via a channel distinct from the broadcast channel, an audience report response.

It is to be noted that the concerned terminal users are the consumers of the content(s) that is(are) broadcast. Each consumer or following person may benefit from the broadcast content(s), through at least one of the user senses, such as the eyesight, the hearing, the touch, the smell and/or the taste, and/or through a terminal data processing, like a data downloading, a data storing and/or an execution of a particular application (or service).

The invention solution makes it possible to measure an audience for at least one particular content that is broadcast to a fleet of terminal(s), as measuring and reporting device(s).

Advantageously, the audience report request is included within one message that is timely linked to the content data for which the audience report is requested.

According to a further aspect, the invention is a terminal for monitoring an audience measurement relating to data. The data is broadcast, through a broadcast channel, from outside of the terminal. The broadcast data is to be received by the terminal.

According to the invention, the terminal is adapted to receive, through the broadcast channel, at least one piece of information relating to a request for measuring an audience of at least one content of the data, said audience report request; and send back, through a return channel, to outside, as a response to the audience report request, an audience report relating to the at least one content of the broadcast data processed by the terminal, said audience report response.

As terminal, it can be, for example, a mobile telephone, a PDA (acronym for "Personal Digital Assistant"), a Personal Computer (or PC) a mobile laptop, or a portable TV. The terminal may be able to cooperate with a token.

According to a further aspect, the invention is a token for monitoring an audience measurement relating to data. The token is intended to cooperate with a terminal. The data is broadcast, through a broadcast channel, from outside of the token. The broadcast data is to be received by the terminal.

According to the invention, the token is adapted to receive, from outside, at least one piece of information relating to a request for measuring an audience of at least one content of the data, said audience report request; and send back, to outside, as a response to the audience report request, an audience report relating to the at least one content of the broadcast data processed by the terminal, said audience report response.

It is to be noted that, as token, it can be any electronic device comprising at least one microprocessor, at least one memory (or being connected to one memory), and an Input/Output communication interface. The token can constitute any electronic support, as a Secure Removable Module (or SRM). For example, it can be embodied within a smart card, a smart dongle of the USB (acronym for "Universal Serial Bus") type (that does not require any specific reader within a host computer), a Secure Digital card (or SD card), a Multi-Media Card (or MMC) or a chip to be fixed to a terminal, as a host device, preferably in a removable manner. The token is any electronic medium that may have different form factors.

According to a further aspect, the invention is a system for monitoring an audience measurement relating to data. The system comprises at least one broadcast service and at least one terminal. The broadcast device broadcasts, through a broadcast channel, data to be received by at least one terminal.

According to the invention, the broadcast device is adapted to broadcast, through the broadcast channel, at least one piece of information relating to a request for measuring an audience of at least one content of the data, said audience report request; and the at least one terminal is adapted to send back, through a return channel, as a response to the audience report request, an audience report relating to the at least one content of the broadcast data processed by the at least one terminal, said audience report response; and the system comprises the audience report collecting device, the audience report collecting device being adapted to collect at least one audience report response originating from at least one terminal.

### Brief description of the drawings:

Additional features and advantages of the invention will be more clearly understandable after reading a detailed description of one preferred embodiment of the invention, given as an indicative and non-limitative example, in conjunction with the following drawings:

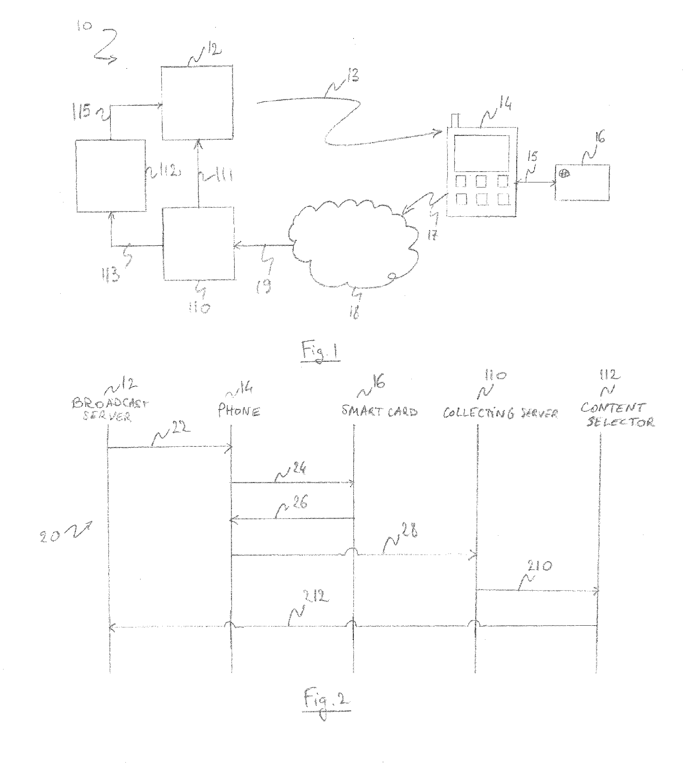

- Figure 1 illustrates a simplified diagram of one embodiment of a system comprising a broadcast server, as a broadcast device, a mobile telephone, as a terminal, a collecting server, as an audience report collecting device, and a smart card, as a token, the system being adapted to monitor an audience measurement relating to content data that is broadcast from the broadcast server to the mobile telephone according to the invention; and
- Figure 2 represents an example of a message flow notably between the broadcast server, the mobile telephone, the smart card and the collecting server of the system of figure 1.

### Detailed description:

A description of the invention that follows is made with a reference to the name of the entities or the messages defined by the OMA BCAST standard or by a mobile radio-communication network standard, such as a GSM (acronym for "Global System for Mobile communications"), UMTS (acronym for "Universal Mobile Telecommunication System") and/or CDMA (acronym for Code Division Multiple Access) network(s).

Nevertheless, the present invention can be applied to any broadcast network having technical background similar to the OMA BCAST network and to any radio-communication network having technical background similar to the GSM, UMTS and/or CDMA network(s).

As broadcast network(s), it can be, for example, a Digital Video Broadcasting-Handheld network (or DVB-H); a Digital Audio Broadcasting network (or DAB); a Digital Multimedia Broadcasting network (or DMB); a Digital Radio Mondiale network (or DRM); a Multimedia Broadcast Multicast Services network (or MBMS); a BroadCast MultiCast Services network (or BCMCS); a Forward Link-Only network (or FLO); a Wimax network; a third generation network; and/or a fourth generation network.

Herein under is considered a case in which the invention method for monitoring an audience measurement relating to data is implemented by a broadcast server relating to a broadcast network, a mobile telephone, and a smart card, as a token, and a collecting server, as an audience report collecting device.

As token, the smart card is a SIM type smart card that cooperates with the mobile telephone, as terminal. As SIM type smart card, it can be a smart card that securely stores an International Mobile Subscriber Identity (or IMSI), as a unique number associated with all GSM and UMTS network mobile phone users. The IMSI is used to identify a subscriber in relation to at least one mobile radio-communication network.

The SIM type smart card can be, for example, a SIM smart card for a GSM network, a Universal Subscriber Identity Module (or USIM) for a UMTS network, a Removable User Identity Module (or RUIM), a CDMA Subscriber Identity module (or CSIM) for a CDMA network, and/or an Internet Protocol multimedia Services Identity Module (or ISIM) for IP Multimedia Subsystem (or IMS). Naturally, the just aforementioned list is not exhaustive but only for exemplifying purposes and is not considered to reduce the scope of the present invention.

Moreover, instead of being constituted by a mobile telephone, the terminal can be, for example, a personal computer, a desktop computer, a laptop computer, and/or a PDA.

Figure 1 shows, among others, an electronic system 10 for monitoring an audience measurement relating to data.

The system 10 for monitoring an audience measurement relating to data is able to provide a specific audience measurement (or level) for a dedicated content(s) that is(are) broadcast.

The system 10 for monitoring an audience measurement comprises a broadcast server 12, as a broadcast device, a mobile telephone 14, as a terminal, a SIM type smart card 16, as a token and as a metering and reporting device, and a collecting server 110, as an audience report collecting device.

According to another embodiment (not represented), the system for monitoring an audience measurement includes a broadcast device, a terminal, as a metering and reporting device, and an audience report collecting device. In such an embodiment, the terminal does not have to cooperate with a token, like a smart card, so as to monitor an audience measurement.

For the sake of clarity and conciseness, a mobile telephone 14 and a SIM type smart card 16 are termed hereinafter a phone 14 and a card 16 respectively.

The broadcast server 12 transmits, through a one-way communication channel, as a broadcast channel 13, content data to the phone 14 among a plurality of phones (not represented) without identifying any addressee of the content data.

As content data, it can constitute data relating to at least one application, audio and/or video provided by the broadcast server 12.

The application data that can be considered as content data may be any application that provides, when executed by the phone 14 and/or the card 16, a service to the phone user, such as a game.

The broadcast channel 13 is transported through the OMA BCAST network.

The content data to be broadcast by the broadcast server 12 can be previously encrypted, so as to protect access to the content data.

The broadcast server 12 transmits, via the broadcast channel 13, to the phone 14 a message comprising data relating to a request for measuring an audience of the content data, termed audience report request message. The audience report request message conveys an audience report request.

The broadcast server 12 can broadcast, besides the content data, other data timely linked to the content data stream, via the broadcast channel 13. The other data can be data relating to one key(s) to be used to decrypt the encrypted content data, so as to obtain the original content data in clear (without any encryption), data relating to a specific message timely linked to the content data that is broadcast, and/or data relating to a service guide, so as to inform a user of a program relating to the content data that is currently broadcast and/or to be broadcast.

The audience report request is inserted within the other data timely linked to the content data stream. Alternatively, the broadcast server 12 inserts, within the content data stream to be broadcast, the audience report request.

The broadcasting of the audience report request can be triggered by an order originating from the collecting server 110, as an audience report collecting device, and relating to an audience measurement to be performed on demand. The collecting server 110 is connected to the broadcast server 12 by at least one way-communication link 111.

According to another embodiment, a dedicated server that is connected to the broadcast server sends to the broadcast server, an order for launching an audience measurement campaign. The dedicated server, as an audience measurement trigger, is or may be connected to the audience report collecting device.

The audience report request is attached to the content data that is concerned by either a current broadcasting or a (just) completed broadcasting or a broadcasting to be performed in an imminent manner or in a near future (such as a few seconds). Thus, the audience report request is transmitted either simultaneously with or before or after the broadcasting of the content data.

Since the audience report request is also broadcast, the audience report request is addressed, at once, to a fleet of phones including the phone 14, to which the content data is also addressed, saving thus a network bandwidth (notably with respect to a communication from a point to point of the audience report request).

Preferably, the audience report request is timely linked to the content data for which the audience report is requested.

In other words, the audience report request is broadcast while the content data has just been broadcast or is itself (currently) being broadcast or is to be broadcast.

Consequently, the audience report relating to a particular content(s) can be requested through the broadcast server 12, so as to be received, from the concerned phone(s), at a given date and time, e.g. during or just at the end the broadcasting of the content(s) to be surveyed.

The audience report request is included within at least one specific message timely linked to the broadcast channel. The specific message can contain a key to be used to decrypt the content data.

To be compliant with OMA BCAST standard, the audience report request can be conveyed by at least one of the following messages: a Short Term Key Message (or STKM); a Service Guide message; and/or another specific message timely linked to the content data stream.

The audience report request can be protected in its integrity by using, for example a check sum or a Message Authentication Code (or MAC) algorithm, so as to protect the concerned data from any alteration.

To be authenticated by the card 16 as the sender of the audience report request, the broadcast server 12 can sign the audience report request by using a algorithm with a public key, such as Rivest Shamir Adleman (or RSA), type algorithm or an elliptic curve. In a case where the public key algorithm is used, the broadcast server 12 encrypts the audience report request using a private key specific to the broadcast server 12. The card 16, as an addressee of the encrypted audience report request, has previously received a public key to be used for decrypting the encrypted audience report request.

To be authenticated as the sender of the audience report request, the broadcast server 12 (or the collecting server 110) can encrypt the audience report request by using a private key algorithm, such as, for example, a Data Encryption Standard (or DES), 3 DES, or Advanced Encryption Standard (or AES). In such a case, the broadcast server 12 (or the collecting server 110) has to communicate to the card 16 a secret key. To establish a secret key session, the broadcast server 12 (or the collecting server 110) and the card 16 may use a mechanism of mutual authentication of the Authentication and Key Agreement (or AKA) type or the Public Key Infrastructure (or PKI) type.

As known per se, the phone 14 includes, as data processing means, at least one microprocessor, volatile and non-volatile memories, at least two Input/Output (or I/O) interfaces linked together through a data and control bus (not shown).

The microprocessor processes and controls data within the phone 14 and/or data to be exchanged with outside of the phone 14. The microprocessor controls and communicates with all the components of the phone 14, such as the I/O interfaces.

The memories store data notably relating to an Operating System and applications supported by the phone 14.

The I/O interfaces comprise a contact interface (not represented) of the type ISO (acronym for « International Standard Organization ») 7816, as one I/O interface, to interact with the card 16. The contact interface is intended to let communicate, through a bi-directional link 15, the phone 14 with the card 16.

The I/O interfaces comprise an antenna for receiving data broadcast over-the-air (or OTA), via a long range radiofrequency (at least mono-directional) link 13, through a broadcast network, with the broadcast server 12.

The I/O interfaces comprise an antenna for communicating via a long range radiofrequency bi-directional link 17, through a mobile radio-communication network 18, with the collecting server 110.

The phone 14 translates or renders, possibly thanks to data, like data relating to keys originating from the card 16, the content data to provide a service to a end user. As a provided service, for example, the phone 14 is able to make the content data (received from the broadcast server 12) perceptible to a phone user, notably through at least one phone interface with a user, like a phone loudspeaker and/or a phone display, for audio and/or video data. The phone 14 allows the phone user, as consumer, to consume the content data that is broadcast from the broadcast server 12.

In the described preferred embodiment, the phone 14 cooperates with a card 16. However, it is clear to a man skilled in the art that, according to another embodiment, the phone 14, as terminal, is a single entity for ensuring also the role of the card 16, as a reporting or metering device. In such a case, a corresponding system for monitoring an audience measurement does not need to include any token, like a smart card.

The card 16 is coupled, through a bi-directional link 15, to the phone 14.

The phone 14 sends to the card 16 the audience report request. As known per se, the phone 14 periodically sends the STKM to the card 16 with a time period of typically around ten seconds. For example, the STKM further carries the information relating to the audience report request. Thus, in the same time, the phone 14 sends to the card 16 a current STKM and the audience report request to be executed.

The card 16 includes a chip.

The chip includes, as data processing means, at least one microprocessor, volatile and non-volatile memories, at least one I/O interface linked together through a data and control bus (not shown).

The microprocessor processes and controls data within the chip and/or data to be exchanged with outside of the chip. The microprocessor controls and communicates with all the components of the chip, such as the I/O interface.

The memories store data notably relating to an Operating System and applications supported by the chip.

The memories can be constituted by one or several EEPROM (acronym for "Electrically Erasable Programmable Read-Only Memory"), one or several ROM (acronym for "Read Only Memory"), one or several Flash memories, and/or any other memories of different types, like one or several RAM (acronym for "Random Access Memory").

The memories can store at least one application providing at least one security function, a digital signature, a card identification, a card authentication, an on-board key generation, and/or a secure exchange for on-line transactions. The memories may store credential(s), such as an encryption key, so as to protect the data that is thus exchanged with the external entity. The credentials can be used to authenticate the broadcast server 12 before any external entity, like the card 16, and/or sign data to be sent to outside world, like the collecting server 110, possibly by using data that is received from outside.

The I/O interfaces comprise a contact interface (not represented) of the type ISO (acronym for « International Standard Organization ») 7816, as one I/O interface, to interact with the phone 14. The contact interface is intended to let communicate, through the bi-directional link 15, the card 16 with the phone 14.

To send the audience report request, the phone 14 and the card 16 may use Application Protocol Data Unit (or APDU) or HyperText Transfer Protocol (or HTTP) through the bi-directional link 15.

The card 16 is therefore involved, as one possible entity, as a metering and reporting device, included within the system 10 for monitoring an audience measurement. The card 16, as the metering device, is the addressee of the audience report request. As the metering device, the card 16 is able to interpret and execute the audience report request. Then, the card 16, as the reporting device, is able to send back, through the phone 14 and a mobile radio-communication network 18, via an Over-The-Air (or OTA) channel, to the collecting server 110, an audience report relating to the content data to be processed by the phone 14. The audience report is a response to the audience report request.
- As known per se, the OTA channel, such as a SMS channel or packet data channel, is a channel that is generally used by the mobile radio-communication network 18 for remote card management features.

The audience report uses a channel, as a return channel, connecting the metering device to the collecting server 110, as an audience report collecting device.

The return channel connects the card 16, as the metering device, through the bi-directional link 15, the phone 14, at least one mono-directional link 17, the mobile radio-communication network 18, and at least one mono-directional link 19, to the collecting server 110, as the audience report collecting device.

The return channel can include at least one of the following:
- an OTA channel;
- a Global System for Mobile communication (or GSM) channel;
- a Short Message Service (or SMS) channel;
- an Internet Protocol (or IP) channel;
- a General Packet Radio Service (or GPRS) channel;
- an Enhanced Data rates for GSM Evolution channel;
- a third Generation Partnership Project (or 3GPP) channel; and
- a fourth radio-communication Generation channel.

The return channel that is used by the audience report response, for example the OTA channel, is distinct from the channel used by the audience report request, namely the broadcast channel.

The collecting server 110, as the audience report collecting device, is able to collect, process and analyze at least one audience report response originating from the concerned fleet of cards, namely at least the card 16 that is used to benefit from the currently broadcast content data.

The audience report collecting device may include or may be connected to an OTA server (not represented). As known per se, the OTA server is notably used for remotely managing cards. The OTA server is used to receive and forward the audience report(s) originating from the phone(s) to the collecting server 110.According to another embodiment, the audience report collecting device is adapted to collect, process and analyze all the audience report responses received from the concerned fleet of phones that have processed the content data.

The collecting server 110 is connected to the broadcast server 12.

Thanks to the invention system 10, the collecting server 110 may obtain audience reports, via a plurality of audience report responses, upon an almost real time, when applicable.

The proposed system 10 does not need to include any further intermediary entity(ies) between the broadcast server 12 and the collecting server 110. In other words, the collecting server 110, as the audience reports collecting device, can be directly connected to the broadcast server 12. The proposed system 10 constitutes a simple and cheap architecture that is also simple and cheap to implement.

The broadcast server 12 and the collecting server 110 are distinct from each other and constitute therefore two separates servers.

The broadcast server 12 and the collecting server 110 may be included within one and the same device.

The collecting server 110 is adapted to generate an analysis result. The collecting server 110 can transmit, through at least one mono-directional communication link 113, the analysis result to at least one content selector 112, such as a server, without having received any corresponding prior request.

The communication link 113 may be bi-directional. Thus, the content selector 112 may transmit to the collecting server 110 a request for obtaining an analysis result and the collecting server 110 may send back, as response to the request, an analysis result.

The content selector 112 may have one or several particular content data, as input(s). The content selector 112 may select a particular content, such as, among others, at least one specific advertisement among a plurality of accessible specific advertisements AD1, AD2,...ADn.

The content selector 112 is connected, through at least one-way communication link 115, to the broadcast server 12.

The content selector 112 may use the analysis result to select one particular content data to be broadcast in real time by the broadcast server 12 with the content data. The broadcast server 12 may broadcast, besides the content data to be broadcast, such as data relating to an identified rugby match, data relating to some selected advertisement(s) based upon the analysis result and/or data relating to some analysis result, such as the count of the following people, as content consuming people, who are currently watching the identified rugby match. Thus, the people following the content data may also receive information directly or indirectly based upon the analysis result.

The people who are following the content data may also watch, hear and/or feel some particular data added by the content selector 112 within the original content data stream.

The collecting server 110, as audience report collecting device, sends, through the one way-communication link 111, to the broadcast server 12:
- at least one piece of data for requesting an audience report request to be broadcast within a content data stream, in order to launch an audience measurement; and/or
- at least one piece of data relating to an analysis result relating to at least one audience report response originating from at least one card 16 (and/or at least one phone), in order to inform the following (people) about, for example, the audience measurement and/or any other information resulting from the analysis result (for example, the gender of the following (people)) associated with the content data that is currently or has been broadcast.

The real time reactivity is interesting notably to allow an interaction within the system 10 for monitoring an audience measurement by letting the broadcast server 12 to subsequently (i.e. after the collecting server 110 has received and analysed all the audience report responses) broadcast data relating to an analysis result and provided by at least one content selector 112 to the concerned phone 14.

The broadcast server 12 may benefit from the audience reports to broadcast some chosen or selected content data to be synchronized with the content data.

For example, the content selector 112 may select a particular advertisement when the audience measurement resulting from the analysis result is equal or greater than a predefined threshold relating to a count of people who consume the broadcast content data. The content selector 112 may select another particular advertisement when the audience measurement resulting from the analysis result lets appear that the ratio of the following (people) is rather one identified gender than the other one.

Then, the content selector 112 transmits to the broadcast server 12 the selected particular advertisement, so as to be broadcast to the following (people) (namely the phone users) who consumed the broadcast content data that has just been the subject-matter of the audience reports.

Moreover, the content selector 112 may establish, from the analysis resulting from the audience reports, at least one message for informing the consumers (namely the phone users) for example about a current level of the audience of the broadcast content data and/or other information relating to the consumers. Then, the content selector 112 transmits to the broadcast server 12 the message for informing the consumers, so as to be broadcast to the consumers (namely the phone users) of the broadcast content data that has just been the subject-matter of the audience reports.

The subsequent broadcast data is displayed and/or transmitted through a sound signal to the phone user.

An operator, as a service provider, that directly or indirectly (through the content selector 112) administrates the broadcast server 12, may schedule the broadcasting of content data based upon an analysis result originating from the collecting server 110, as the audience report collecting device.

Figure 2 depicts an example of a message flow 20 that involves the broadcast server 12, the phone 14, the card 16, the collecting server 110 and a content selector 112, when the phone 14 receives a broadcast service compliant with the OMA BCAST standard.

It is assumed that the collecting server 110 has triggered an execution of an audience measurement. To trigger such an execution, the collecting server 110 provides the broadcast server 12 with an audience report request to be broadcast through the broadcast server 12, as broadcast service provider, along with the content data itself relating to a particular content to be broadcast through an identified channel of the mobile TV at a predetermined time.

Furthermore, it is assumed that the user of the phone 14 has selected the content data, so as to consume it (and therefore be the subject of an audience report). For example, to select the content data within the OMA BCAST standard, the phone user, thanks to a service guide, having the corresponding rights (by having previously subscribed to the service provided by the broadcast server 12), has selected an associated identified channel of the mobile TV at a predetermined time.

The broadcast server 12 broadcasts to the phone 14, besides a particular content data, such as an identified rugby match, a corresponding associated request 22 for measuring an audience relating to this particular content data.

The request 22 for measuring an audience relating to this particular content data may include executable data, such as a script, that is interpretable by the microprocessor of the card 16, for example, for triggering a specific application (supported by the card 16) allowing to obtain an authorization from the phone user for measuring her/his own audience and transmitting the audience report.

The specific application may advantageously let include, within the audience report, a proof that the phone user who gives her/his consent or authorization, is effectively the user who subscribes to the mobile TV service. To include the proof, the specific application includes a verification of a user authentication. The proof is only given, for example, when the user enters a Personal Identity Number (or PIN) that is only known to the subscriber of the mobile TV service, and has been checked by the card 16 that stores the PIN.

According to another embodiment, the proof is given when the user enters a biometric print, such as a fingerprint, that is checked by the card 16 that stores the expected biometric print.

The user authentication that is checked by the card 16 may have a particular interest when the user of the mobile TV service is a child or a person under eighteen. For such a following person, the authorisation for measuring and sending an audience report from the card 16 shall be performed by a parent.

When the phone user authorizes the audience report relating to this particular content data, the card 16 (as addressee of the audience report request) sends a certificate, as a proof of her/his consent (or termed an "opt-in"), within the audience report response. The certificate can be specific to the considered audience measurement. The certificate can also be stored within the card 16 or generated by the card 16 and released as soon as the user has been authenticated by the card 16 (that executes the specific application).

To give or not her/his authorization to respond to the audience report request, the application may use a Smart Card Web Server (or SCWS) or a particular graphic interface, as a user interface, to require from the phone user her/his authorization, for example by pushing on a button associated with an approval, such as "OK", and another button associated with a refusal, such as "cancel".

The specific application may request, through another graphic interface, the user to enter data as PIN, when the phone user has pushed the "OK" button.

According to another embodiment, instead of being contained within the request 22 for measuring an audience relating to this particular content data, a dedicated message (not timely linked to the broadcast content data) includes the executable data for triggering a specific application allowing to obtain an authorization from the phone user for measuring her/his own audience and transmitting the audience report.

The specific application may include a delay random generation used for transmitting the corresponding audience report.

According to another embodiment, the request 22 for measuring an audience relating to this particular content data may include executable data, such as a script, that is interpretable by the microprocessor of the card 16, for example, to trigger a specific application (supported by the card 16) allowing to generate a delay random that is to be taken into account by the card 16 for transmitting the corresponding audience report.

The collecting server 110 that collects all the audience report responses should then receive them in a distributed time period.

The request 22 for measuring an audience relating to this particular content data may encompass at least one parameter comprising at least one of the following elements:
- a selection of at least one metrics to be measured;
- a type of data file(s) to be used for the audience report, like a HyperText Markup Language (or html) data page;
- a compression type for reducing a size of the data contained within an audience report;
- a time period to be measured for the follow-up of the associated content data that is broadcast, such as at least one significant time period, like a few minutes;
- a start time and/or a stop time for the audience measurement;
- a selection of at least one user profile type, such as a particular type of subscriber, such as a particular gender of the user (woman or man);
- a selection of at least one user preference type, such as a phone user (and/or card user) that is fond of a particular hobby(ies), such as sport;
- an identifier of a return channel to be used for sending a corresponding audience report response;
- an IP address relating to the collecting server 110 to which the audience report has to be sent;
- a geographic location, such as near an identified town within a country; and/or
- other parameter(s) such as a parameter for requesting from the phone user an authentication certificate, as a proof of her/his consent.

The invention method proposes to carry information, through a broadcast channel, during (or just after or before) the concerned content data broadcasting, to the metering device (the card or the phone). The carried information to the metering devices may thus contain a type of requested report, some requested metrics, some data, such as a user profile type and/or a user preference type, used upon the client side (the card and/or the phone) by the metering device to filter the audience report request and/or to filter, according to a corresponding user profile type and/or a user preference type, a type of subscriber card and/or user, and/or according to a corresponding history usage or personalized data stored within the client side (the card and/or the phone).

The additional carried information is broadcast either:
- within one service guide, within a content data fragment, when the time accuracy for receiving a corresponding audience report is not very critical notably when there is no need of interactivity with the targeted following people. Thus, the card 16 (as metering device) is informed that an audience report response is expected for this particular content data; or
- within a content key stream, when the time accuracy for receiving a corresponding audience report is critical. Since the content key stream is timely linked to the content data stream, the additional information may be carried within an extension of the content of the key stream along with the key required to decrypt the encrypted content data; or
- within a specific other message that is timely linked to the broadcast content, when the time accuracy for receiving a corresponding audience report is critical, notably when interactivity with the targeted following people is needed. The specific other message can be used in an adapted temporal manner to the need more easily than with the use of the content key stream.

The phone 14 receives the request 22 for measuring an audience of the currently received (or already received or to be received) content data relating to the rugby match and encapsulates it within APDU to forward it to the card 16.

Then, the phone 14 sends to the card 16 an APDU request 24 for measuring an audience of the currently received (or already received or to be received) content data relating to the rugby match, notably while specifying the return channel to be used, such as a SMS channel or an IP channel to be open by the phone 14 under control of the card 16.

Once the card 16 receives the latter request 24, the card 16 triggers a dedicated application stored within its memories, so as to process the audience report request.

The card 16 analyses, processes the request 24 and deduces from the received request 24, notably, the type of the return channel to be used for sending back the report, such as a SMS channel, when the expected audience report should contain only few data, or an IP channel when the expected audience report should be large, for example, when expected audience report should be bigger than a predetermined threshold value such as 128 bytes. The audience report request 24 specifies the card 16, as metering device, that a report of an audience measurement metrics is expected by an collecting server 110.

Once the card 16 has processed the request 24 and prepared the report according to the requested parameter(s) (such as a possible metrics list and/or a particular report type), the card 16 sends, by using APDU, to the phone 14 an audience report response 26 accompanied with all the value(s) of the requested parameter(s) and addressed to the collecting server 110 by requesting the phone 14 to open either a SMS channel or an IP channel (to be used for transmitting the audience report response).

To send the audience report response 26, the card 16 may wait a particular date and time that have been, for example, deduced from the card 16 from a script (for generating a delay random) specified within the audience report request, so as to avoid a sending in the same time of all the cards, as metering devices, concerned by the audience report request. A randomization of the sending date and time after the receipt of the audience report request may be thus set.

The value(s) of the parameter(s) requested within the audience report request may take into account individual data stored within the user card 16 and/or history data of previous particular content data that have already been followed by the user through its phone 14.

Then, the phone 14 extracts the audience report response 26 and forwards it by sending a corresponding response 28, through a SMS channel or an IP channel conveyed by a mobile radio-communication network, to the collecting server 110. To send a corresponding response message, the phone 14 receives from the card 16 (or stores) an IP address of the collecting server 110 to be addressed for the audience measurement feed back.

Once the collecting server 110 receives the audience report response accompanied with some precise values of some parameters (like metrics), the collecting server 110 waits for all the audience report responses to be received at some predetermined date and time, such as a few minutes after the collecting server 110 has sent the original audience report request to the broadcast server 12.

As soon as the predetermined date and time has been reached, the collecting server 110 processes and analyses all the received audience report responses, then, generates an analysis result.

Then, the collecting server 110 sends the analysis result within a message 210 possibly accompanied with some message to be overlaid within content data (for example as sub-title to be displayed to a phone user(s)) to the content selector 112. The content selector 112 may then select one particular content data. The content data is adapted to the count and/or the type of the people who follow the content data, such as selecting an advertisement relating to particular (women or men) shoes specific to the targeted following people, that has been found to be representative of the following people, women or men respectively.

The content selector 112 sends to the broadcast server 12 the content data 212 relating to, for example, the selected advertisement relating to shoes of a particular gender specific to the following people, as being the representative one.

Eventually, the broadcast server 12 continues with (not represented) the broadcasting of the content data completed with the selected advertisement relating to shoes of a particular gender specific to the following people, as being the representative one and the one targeted by the selected advertisement.

For one specific event occurring on schedulable broadcasting of content data, there may be an interest to collect audience measurement analysis result just right after the content data relating to the event has been broadcast or even during the broadcasting itself.

The invention method allows to automatically schedule a particular content, such as advertising, according to an almost immediate audience and type of audience involved at a given date and time. The almost immediate returned audience report responses allow an interaction within the invention system in terms of the provision of content data between, in particular, the broadcast server 12, the phone 14 and the collecting server 110.

Moreover, the invention method allows to indicate the phone user(s), as consumer(s) of the content(s) that has(have) (just) been broadcast, a measure (or level) of an audience possibly accompanied with one or several metrics on real time using one or several informative messages. The informative message(s) can be, for example, sub-titles relating to information specific to the rate of a gender of the following people, to be broadcast simultaneously with content data to be broadcast. At least one phone interface, such as a phone display and/or a phone loudspeaker, is used for transmitting to the phone user, the informative messages along with the content data.

## Claims

1. A method (20) for monitoring an audience measurement relating to data, data being broadcast, through a broadcast channel (13), from a broadcast device (12) and to be received by at least one terminal (14),
**characterized in that** the method comprises the following steps:
- the broadcast device broadcasts, through the broadcast channel, at least one piece of information relating to a request (22) for measuring an audience of at least one content of the data, said audience report request; and
- at least one terminal sends back, through a return channel (18), to an audience report collecting device (110), as a response to the audience report request, an audience report (28) relating to the at least one content of the broadcast data processed by the at least one terminal, said audience report response.

2. Method according to claim 1, wherein the return channel includes at least one element belonging to a group comprising:
- an Over The Air channel;
- a Global System for Mobile communication channel,
- a Short Message Service channel;
- an Internet Protocol channel;
- a General Packet Radio Service channel;
- an Enhanced Data rates for GSM Evolution channel;
- a third generation channel;
- a fourth generation channel.

3. Method according to claim 1 or 2, wherein the audience report request includes executable data for requesting an authorisation to a terminal user for responding or not to the audience report request and/or at least one parameter belonging to a group comprising:
- a geographic location of the terminal users concerned by the audience report request;
- a selection of at least one metrics to be measured;
- a type of data file to be used for the audience report;
- a time period to be measured for the follow of at least one content;
- a selection of at least one user profile type;
- a selection of at least one user preference type;
- an identifier of a return channel to be used for sending a corresponding audience report response;
- a compression type for reducing a size of data contained within an audience report;
- a start time and/or a stop time for the audience measurement;
- an IP address relating to the audience report collecting device to which the audience report has to be sent;
- a request of a certificate, as a proof of a terminal user authorisation.

4. Method according to any of claims 1 to 3, wherein the audience report request is included within at least one message that is timely linked to the content for which the audience report is requested.

5. Method according to any of claims 1 to 4, wherein the audience report response includes:
- at least one value relating to at least one measured metrics; and/or
- a certificate, as a proof of a terminal user authorisation for responding to the audience report request.

6. Method according to any of claims 1 to 5, wherein the audience report collecting device collects, processes and analyses at least one audience report response.

7. Method according to any of claims 1 to 6, wherein the broadcast device inserts within the data to be broadcast the audience report request.

8. A terminal (14) for monitoring an audience measurement relating to data, the data being broadcast, through a broadcast channel, from outside and to be received by the terminal,
**characterized in that** the terminal is adapted to:
- receive, through the broadcast channel, at least one piece of information relating to a request (22) for measuring an audience of at least one content of the data, said audience report request; and
- send back, through a return channel, to outside, as a response to the audience report request, an audience report (28) relating to the at least one content of the broadcast data processed by the terminal, said audience report response.

9. A token (16) for monitoring an audience measurement relating to data, the token being intended to cooperate with a terminal (14), the data being broadcast, through a broadcast channel, from outside and to be received by the terminal,
**characterized in that** the token is adapted to:
- receive, from outside, at least one piece of information relating to a request (24) for measuring an audience of at least one content of the data, said audience report request; and
- send back to outside, as a response to the audience report request, an audience report (26) relating to the at least one content of the broadcast data processed by the terminal, said audience report response.

10. A system (10) for monitoring an audience measurement relating to data, the system comprising at least one broadcast device (12) and at least one terminal (14), the broadcast device broadcasting, through a broadcast channel (13), data to be received by at least one terminal,
**characterized in that** the broadcast device is adapted to broadcast, through the broadcast channel, at least one piece of information relating to a request (22) for measuring an audience of at least one content of the data, said audience report request;
**in that** the at least one terminal is adapted to send back, through a return channel, to an audience report collecting device (110), as a response to the audience report request, an audience report (28) relating to the at least one content of the broadcast data processed by the at least one terminal, said audience report response; and
**in that** the system comprises the audience report collecting device, the audience report collecting device being adapted to collect at least one audience report response originating from at least one terminal.
